Europäisches Patentamt

European Patent Office

Office européen des brevets

(11) Numéro de publication: **0 016 684**
**B1**

(12) **FASCICULE DE BREVET EUROPEEN**

(45) Date de publication du fascicule du brevet: **10.10.84**

(21) Numéro de dépôt: **80400311.9**

(22) Date de dépôt: **07.03.80**

(51) Int. Cl.³: **F 41 G 3/14,** F 41 G 3/22, G 01 C 7/00, E 21 B 47/022

(54) Dispositif pour la détermination d'une ligne de visée.

(30) Priorité: **09.03.79 FR 7906311**

(43) Date de publication de la demande:
**01.10.80 Bulletin 80/20**

(45) Mention de la délivrance du brevet:
**10.10.84 Bulletin 84/41**

(84) Etats contractants désignés:
**BE CH DE FR GB IT LU NL SE**

(56) Documents cités:
**FR-A-2 076 693**
**FR-A-2 126 981**
**FR-A-2 319 765**
**FR-A-2 392 470**
**GB-A-1 268 938**
**US-A-3 791 043**
**US-A-3 803 387**
**US-A-3 862 499**

(73) Titulaire: **CROUZET**
**128, Avenue de la République**
**F-75011 Paris (FR)**

(72) Inventeur: **Costet, Jean Robert**
**25 rue Maréchal Joffre**
**F-26000 Valence (Drôme) (FR)**
Inventeur: **Devaud, Jacques**
**Route de Peyrus**
**F-26120 Chabeuil (Drôme) (FR)**
Inventeur: **Moulin, Michel**
**rue Montplaisir**
**F-26000 Valence (Drôme) (FR)**

(74) Mandataire: **Bloch, Robert et al**
**Cabinet ROBERT BLOCH 39 avenue de Friedland**
**F-75008 Paris (FR)**

Courier Press, Leamington Spa, England.

**Description**

La présente invention concerne un dispositif pour la détermination d'une ligne de visée et de l'orientation d'un trièdre de visée associé à cette ligne de visée, définie par un angle d'azimut magnétique, un angle de site en un angle de dévers déterminés dans un trièdre de référence.

On sait déjà déterminer à bord d'un véhicule ou d'un aéronef des angles de cap, de tangage et de roulis correspondant aux angles d'orientation du trièdre de visée.

C'est ainsi qu'on peut utiliser un gyroscope de verticale pour déterminer le site et le dévers, un magnétomètre pendulé ou statique supplémentaire permettant la détermination de l'azimut magnétique.

On peur également utiliser deux gyroscopes, dont un gyroscope de verticale et un gyroscope directionnel, associés à une plate-forme accélérométrique fixe dans l'espace inertiel, le gyroscope directionnel permettant de mesurer l'azimut magnétique.

On peut encore utiliser des accéléromètres liés au véhicule et associés à des gyromètres, l'intégration des informations gyrométriques permettant de calculer l'azimut magnétique.

Il est également possible de procéder à la détermination d'une ligne de visée par acquisition visuelle à l'aide de moyens visuels purs associés à des moyens de ralliement à commande électromécanique.

Enfin, on peut mettre en oeuvre des systèmes radar ou laser.

La détermination d'une ligne de visée par des moyens visuels purs ne permet pratiquement pas de suivre des cibles mobiles. Quant aux systèmes radar ou laer, ils nécessitent une infrastructure importante en onéreuse.

En ce qui concerne les moyens faisant appel á des gyroscopes, ils sont en réalité mal adaptés dans le cas où il ne s'agirait plus de déterminer une ligne de cap ou de visée à bord d'un véhicule, mais depuis un porteur pratiquement immobile. Dans ce cas, un gyroscope de verticale ou un gyromètre ne serait vraiment pas nécessaire puis-qu'on n'enregistrerait aucun mouvement.

La présente invention vise donc à déterminer de façon efficace et rationnelle une ligne de visée associée à un porteur immobile, sans avoir à metre en oeuvre les moyens lourds ou rudimentaires de l'art antérieur.

A cet effet, la présente invention concerne un dispositif pour la détermination d'une ligne de visée, comportant un casque orientable destiné à être fixé sur la tête d'un opérateur et pouvant être déplacé, un viseur fixé sur le casque et auquel est associée la ligne de visée, et des moyens pour mesurer l'orientation du casque, caractérisé par le fait qu'il comporte, fixés sur le casque, pour la détermination de l'orientation d'un trièdre de visée associé à cette ligne de visée, définie par un angle d'azimut magnétique $(\psi)$, un angle de site $(\theta)$ et un angle de dévers $(\phi)$ déterminés dans un trièdre de référence, un accéléromètre pour mesurer les composantes de l'accélération de la pesanteur terrestre dans le trièdre de visée, et un magnétomètre pour mesurer les composantes du champ magnétique terrestre dans le trièdre de visée, des moyens de calcul agencés pour calculer les angles de site et de dévers à partir des composantes de la pesanteur dans le trièdre de visée, calculer à partir des composantes du champ magnétique terrestre dans le trièdre de visée les composants du champ magnétique terrestre le long de l'axe "long" et de l'axe "travers", et calculer enfin l'angle d'azimut magnétique, le viseur possèdant un index destiné à matèrialiser une direction privilégiée d'observation et recueillant des informations $(\psi_r, \theta_r)$ des moyens de calcul.

Un dispositif suivant le préambule de la revendication 1 est connu par FR—A—2 076 693.

US—A—3 862 499 enseigne la mesure des composantes de l'accélération de la pesanteur terrestre et des composantes du champ magnétique terrestre dans le trièdre associé à une sonde dans un trou de sonde, composantes à partir desquelles un calculateur calcule l'angle de site, l'angle d'azimut magnétique et l'angle de dévers.

L'avantage du dispositif de l'invention réside dans le fait qu'il comporte des moyens simples.

Dans un forme de réalisation préférée du dispositif de l'invention, l'index est mobile et commandé par les moyesn de calcul.

L'invention sera mieux comprise à l'aide de la description suivante d'une forme de réalisation préférée du dispositif de l'invention, en référence au dessin annexé, sur lequel:

— la figure 1 représente un diagramme des projections du champ magnétique terrestre sur l'axe "long" et l'axe "travers";
— la figure 2 illustre la représentation d'un trièdre de visée et d'un trièdre de référence;
— La figure 3 représente schématiquement le dispositif de l'invention avec le casque, le viseur, l'accéléromètre et le magnétomètre fixés sur le casque, et
— La figure 4 représente un bloc-diagramme des moyens de calcul associés au casque de visée de la figure 3.

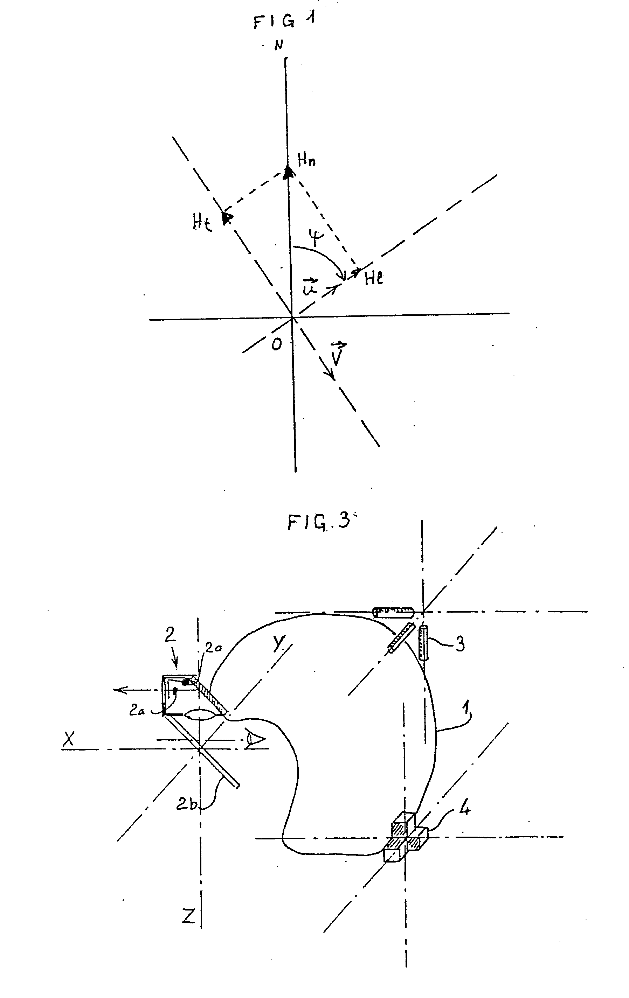

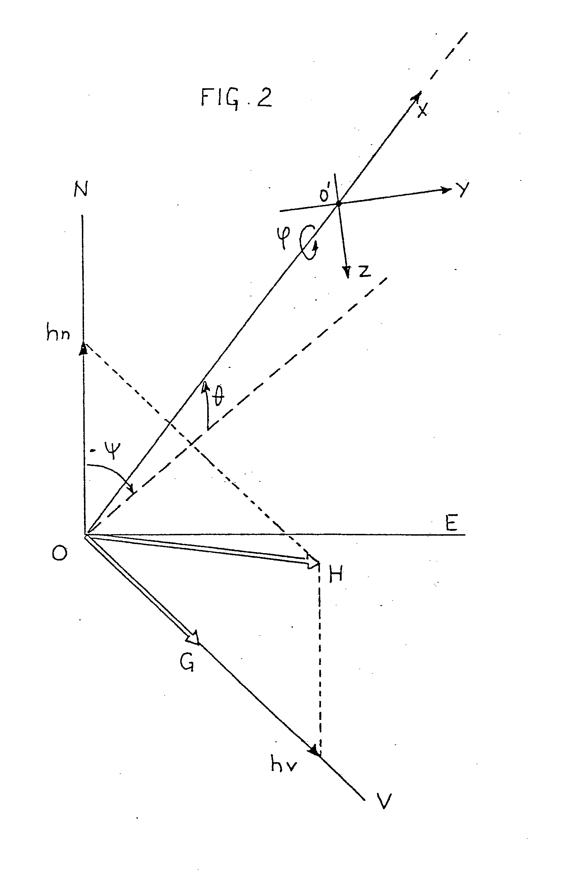

En référence à la figure 2, la présente invention vise à définir une ligne de visée associée à un trièdre de visée représenté par les trois axes O'X, O'Y, O'Z par rapport à un trièdre de référence défini par la direction du nord magnétique ON, la direction de l'est OE et la verticale OV passant par l'origine des coordonnées de ce trièdre de référence.

L'orientation du trièdre de visée O'XYZ, dans le repère géographique de référence ONEV, est définie par un angle de site $\theta$, entre la ligne OO'

des deux origines des trièdres de visée et de référence et sa projection horizontale dans le plan ONE, un angle d'azimut $\psi$, entre la direction du nord magnétique ON' et la projection dans le plan horizontal ONE de la ligne des origines des deux trièdres de visée et de référence, et un angle $\varphi$ de dévers du trièdre de visée dans le trièdre de référence géographique.

L'orientation du trièdre de visée O'XYZ dans le trièdre de référence ONEV étant conue, il va de soi que la ligne de visée étant définie dans le trièdre de visée, elle le sera également dans le trièdre de référence.

En référence à la figure 3, le dispositif de l'invention comporte un casque 1, rigide et en matériau amagnétique, sur lequel sont fixés:

— un viseur 2, pourvu d'une glace semi-argentée 2b, permettant de superposer au paysage extérieur l'image d'un réticule collimaté à l'infini;
— un magnétomètre statique triaxial 3, du type vanne de flux asservie, et
— un accéléromètre triaxial 4.

Il faut d'ores et déjà noter qu'il est avantageux de disposer dans le viseur 2 un index mobile, asservi aux indications d'un calculateur dont il sera question ci-après, pour matérialiser, par la croisée des aiguilles de deux galvanométres 2a, la direction d'apparition probable d'une cible et permettre ainsi à l'opérateur, sur la tête duquel le casque est placé, d'orienter la ligne de visée dans cette direction.

Il faut également noter que le magnétomètre 3 est éloigné le plus possible, à la surface du casque 1, de l'accéléromètre 4, afin d'éliminer au maximum les perturbations magnétiques.

Il faut en outre noter que l'accéléromètre 4 est de préférence placé à la partie inférieure arrière du casque 1, c'est-à-dire au niveau du cou de l'opérateur, c'est-à-dire encore au niveau du centre de rotation de sa tête, de manière à s'affranchir des accélérations parasites dues au mouvement de rotation de la tête de l'opérateur.

Enfin, l'accéléromètre 4 et le magnétomètre 3 abordés ci-dessus sont des capteurs triaxiaux, mais il est clair que l'invention n'est nullement limitée à de tels types de capteurs qui peuvent, comme on le verra plus loin, être des capteurs bi ou uniaxiaux.

La structure du casque et les équipements qui sont fixés dessus ayant été décrits, procédons, avant la description des moyens de traitement des informations délivrées par les capteurs à l'analyse du procédé de l'invention.

L'accéléromètre 4, utilisé dans le cas présent en gravitomètre, fournit les composantes, dans le repère de visée O'XYZ, du vecteur $-\vec{g}$ opposé au vecteur accélération de la pesanteur.

En référence à la figure 2, sur laquelle sont représentés, le vecteur accélération de la pesanteur $\vec{g}$ et le vecteur champ magnétique terrestre $\vec{H}$, les composantes gx, gy, gz, mesurées par l'accéléromètre 4 dans le trièdre de visée O'XYZ, du vecteur $-\vec{g}$ sont définies par le système de trois équations suivant:

$$(1) \quad \begin{cases} gx = g \sin \theta \\ gy = -g \sin \varphi \cos \theta \\ gz = -g \vos \varphi \cos \theta \end{cases}$$

avec $g = |\vec{g}|$, module du vecteur accélération de la pesanteur.

On déduit du système 1 l'angle de site $\theta$ par la formule

$$(2) \quad \sin \theta = \frac{gx}{\sqrt{gx^2 + gy^2 + gz^2}},$$

et l'angle de devers $\varphi$, par la formule

$$(3) \quad tg\varphi = \frac{gy}{gz}.$$

Les angles $\theta$ et $\varphi$ sont définis sans ambiguité dans les deux cadrans s'étendant de $-90°$ à $+90°$.

En référence à la figure 1, rappelons que l'axe "long" est la projection horizontale de la ligne OO' des deux origines des trièdres de visée et de référence sur le plan horizontal ONE du repère de référence, l'axe "travers" étant orthogonal dans ce même plan à l'axe "long", la composante du champ magnétique terrestre sur l'axe "long" formant avec le nord magnétique l'angle d'azimut magnétique $\psi$ recherché.

En référence aux figures 1 et 2, l'angle d'azimut magnétique $\psi$ est donne par la formule

$$(4) \quad \begin{cases} \psi = \operatorname{Arc} tg\left(-\dfrac{Ht}{Hl}\right) \\ \phantom{\psi} = \operatorname{Arc} tg\left(\dfrac{Hz \sin \varphi - Hy \cos \varphi}{Hx \cos \theta + Hy \sin \theta \sin \varphi + Hz \sin \theta \cos \varphi}\right) + k\pi \end{cases}$$

avec Ht et Hl, composantes du champ magnétique terrestre sur l'axe "long" et l'axe "travers".

L'ambiguité du calcul de l'angle $\psi$ à $k\pi$ près est levée par le signe du dénominateur de la fraction de la formule (4) qui représente, au facteur positif près, cos $\psi$.

On notera que la détermination de l'orientation du repère de visée O'XYZ n'est possible qu'en dehors de pôles nord et sud de la terre, où les deux vecteurs $\vec{g}$ et $\vec{H}$ ne sont pas colinéaires. En outre, on remarquera que le vecteur $\vec{g}$ n'apporte aucune information d'azimut puisqu'il est porté par l'axe vertical.

En définitive, pour procéder à la détermination de l'orientation du repère de visé O'XYZ dans le repère de référence géographique ONEV, on procède de la manière suivante. On mesure, à l'aide de l'accéléromères 4, les composants du vecteur opposé au vecteur accélération de la pesanteur dans le trièdre de visé O' XYZ; on calcule le sinus de l'angle de site $\theta$, entre la ligne des origines des coordonnées des deux repères de visée et de référence et sa projection horizontale, par la formule (2) et à l'aide du système (1), on calcule la tangente de l'angle de devers $\varphi$ par la formule (3) et à l'aide du système (1), on mesure, à l'aide du magnétomètre 3, les composantes du champ magnétique terrestre Hz, Hy, Hz dans le repère de visée O'XYZ, on détermine les projections du champ magnétique terrestre sur l'axe "long" et l'axe "travers", pour en déduire la valeur de l'angle d'azimut magnétique $\psi$ selon la formule (4).

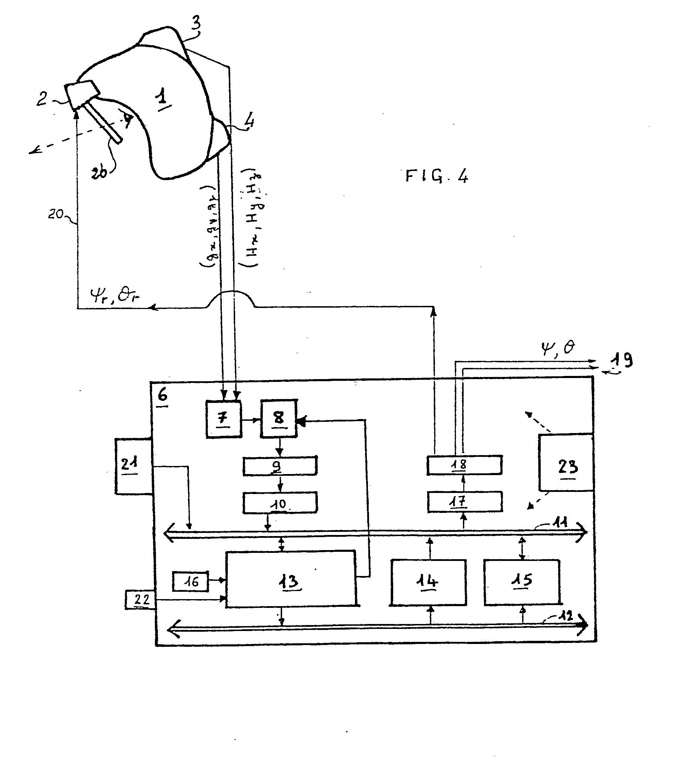

En référence à la figure 4, qui représente un bloc-diagramme des moyens de calcul associés au casque de visée 1 avec ses capteurs 3 et 4 et son viseur 2, on exploite les informations fournies pr les capteurs 3 et 4 de la manière suivante.

Notons tout d'abord que les moyens de traitement 6 (fig. 4) forment un minicalculateur qui comprend une mémoire analogique 7, un multiplexeur 8, un convertisseur analogique numérique 9, un coupleur d'entrée 10, des bus de données 11 et d'adresses 12, un microprocesseur 13, une mémoire morte 14, une mémoire vive 15, une horloge 16, un coupleur de sortie 17, un convertisseur numérique-analogique 18, un organe de commande 22 et une alimentation électrique autonome 23.

Le calculateur 6 possède en outre un organe d'affichage 21 agencé pour introduire dans le calculateur 6 des données extérieures relatives à la direction privilégiée, à repérer par l'opérateur muni du casque 1 à l'aide de l'index 2a du viseur 2. Il s'agit de l'angle site $\theta_0$ et le l'angle d'azimut magnétique $\psi_0$ sous lesquels la dible est vue depuis un poste d'observation extérieur, ainsi que de la distance Do à laquelle se trouve la cible à repérer de ce poste d'observation extérieur, de l'angle d'azimut $\psi_0$ entre le poste d'observation et l'opérateur portant le casque 1 et enfin de la distance D entre l'opérateur et ce poste d'observation.

Les capteurs 3 et 4 sont alimentés depuis l'alimentation électrique 23, par exemple du type piles ou accumulateurs.

Le magnétomètre 3 et l'accéléromètre 4 ayant leurs axes harmonisées avec le trièdre de visée du viseur 2, le magnétomètre 3 mesure et délivre au calculateur 6 les composantes Hx, Hy, et Hz du vecteur champ magnétique terrestre H dans le trièdre de visée et l'accéléromètre 4 mesure et délivre les composantes gx, gy, gz du vecteur opposé au vecteur accélération de la pesanteur, $-\vec{g}$, dans le trièdre de visée. Ces informations sont reçues dans le module d'acquisition comprenant les éléments 7 à 10.

La mémoire 7 permet de conserver les informations ci-dessus relatives à un instant de visée déterminé pour que le calculateur puisse les lire à des instants différents.

Le multiplexeur 8 raccordé à la mémoire 7 est destiné à aiguiller une à une et successivement chacune des information recueillies pour pouvoir être converties dans le convertisseur 9 raccordé au mulitplexeur 8. Le multiplexeur 8 est commandé par le microprocesseur 13. Le coupleur d'entrée 10 raccordé au convertisseur 9 permet de présenter sur le bus des données 11 du microprocesseur 13 les informations d'entrée numériques sous forme appropriée pour être reconnues par le microprocesseur 13.

C'est la mémoire morte 14 qui garde les différents programmes pour résoudre les systèmes d'équations définis plus haut, et c'est la mémoire vive 15 qui permet de stocker les résultats intermédiaires de la résolution de ces systèmes d'équations.

De cette manière, le microprocesseur 13, synchronisé sur l'horloge 16 et commandé par l'organe 22, élabore à l'aide des mémoires 14 et 15:

— l'angle d'azimut magnétique $\psi$ et l'angle et site $\theta$ de la ligne de visée, ainsi que
— le gisement relatif $\psi_r$ et l'angle de site relatif $\theta_r$ de la direction privilégiée dans le trièdre de visée pour le positionnement de l'index mobile 2a dans le viseur 2, à partir des données extérieures.

Les informations $\psi$ et $\theta$, $\psi_r$ et $\theta_r$ sont délivrées, sous forme analogique, à la sortie du convertisseur numérique analogique 18 raccordé à la sortie du coupleur de sortie 17.

Les informations d'angle $\psi$ et $\theta$ sont envoyées sur une ligne 19 pour être utilisées par exemple pour le pointage ou le pré-pointage automatique d-armes ou d'outils.

Les informations d'angle relatif $\varphi_r$ et $\theta_r$ sont délivrées sur une ligne 20 raccordée au viseur 2 fixé sur le casque 1.

On constate donc que le casque 1 avec ses équipements connus, à savoir un viseur 2, un magnétomètre 3, un accéléromètre 4 fixés sur ce casque, permet, de façon simple, rapide et nouvelle, de déterminer les angles d'azimut magnétiques, de site et de devers d'un trièdre de visée, par la saule combinaison d'un magnétomètre et d'un accéléromètre associés à un trièdre de visée défini par un viseur solidaire de ces capteurs.

Dans des formes de réalisation simplifiées du dispositif de l'invention, l'accéléromètre 4 peut être un accéléromètre biaxial associé aux seuls axes O'X et O'Y du trièdre de visée. Bien entendu, dans ce cas, on supposera que le module du vecteur accélération de la pesanteur $|\vec{g}|$ est localement connu avec une précision convenable.

**Revendications**

1. Dispositif pour la détermination d'une ligne de visée, comportant un casque orientable (1) destiné à être fixé sur la tête d'un opérateur et pouvant être déplacé, un viseur (2) fixé sur le casque et auquel est associée la ligne de visée, et des moyens pour mesurer l'orientation du casque, caractérisé par le fait qu'il comporte, fixés sur le casque, pour la détermination de l'orientation d'un trièdre de visée associé à cette ligne de visée, définie par un angle d'azimut magnétique ($\psi$), un angle de site ($\theta$) et un angle de dévers ($\varphi$) déterminés dans un trièdre de référence, un accéléromètre (4) pour mesurer les composantes de l'accélération de la pesanteur terrestre dans le trièdre de visée, et un magnétomètre (3) pour mesurer les composantes du champ magnétique terrestre dans le trièdre de visée, des moyens de calcul (6) agencés pour calculer les angles de site et de dévers à partir des composantes de la pesanteur dans le trièdre de visée, calculer à partir des composantes du champ magnétique terrestre dans le trièdre de visée les composantes du champ magnétique terrestre le long de l'axe "long" et de l'axe "travers", et calculer enfin l'angle d'azimut magnétique, le viseur (2) possédant un index (2a) destiné à matérialiser une direction privilégiée d'observation et recueillant des informations ($\psi_r$, $\theta_r$) des moyens de calcul (6).

2. Dispositif selon la revendication 1, dans lequel ledit index (2a) est mobile et commandé par lesdits moyens de calcul (6).

3. Dispositif selon l'une des revendications 1 et 2, dans lequel le magnétomètre (3) est un magnétomètre statique triaxial.

4. Dispositif selon l'une des revendications 1 à 3, dans lequel l'accéléromètre (4) est un accéléromètre triaxial.

5. Dispositif selon l'une des revendications 1 à 3, dans lequel l'accéléromètre (4) est un accéléromètre biaxial.

**Patentansprüche**

1. Vorrichtung zur Festlegung einer Visierline, mit einem auf dem Kopf einer Bedienungsperson zu tragenden verstellbaren Helm (1), einem an dam Helm befestigten Sucher (2), dem die Visierlinie zugeordnet ist, und mit Einrichtungen zum Erfassen der Ausrichtung des Helmes, dadurch gekennzeichnet, daß sie, befestigt an dem Helm, für die Bestimmung der Ausrichtung eines Visiertrieders, das der Visierlinie zugeordnet ist, die definiert ist durch einen magnetischen Azimutwinkel ($\psi$), einen Zielhöhenwinkel ($\theta$) und einen Schieflagewinkel ($\varphi$), die determiniert sind in einem Referenztrieder, einen Beschleunigungsmesser (4), um die Komponenten der Beschleunigung der Erdschwerkraft in dem Visiertrieder zu erfassen, und ein Magnetometer (3) umfaßt, um die Komponenten des Erdmagnetfeldes in dem Referenztrider zu erfassen, und daß ein Rechner (6) vorgesehen ist, um, ausgehend von den Erdschwerkraftkomponenten in dem Visiertrieder, den Zielhöhenwinkel und den Schieflagewinkel zu errechnen, ausgehend von den Erdmagnetfeldkomponenten in dem Referenztrieder die Komponenten des Erdmagnetfeldes in Richtung der "Längsachse" und der "Querachse" zu errechnen und dann den Azimutwinkel zu berechnen, wobei der Sucher (2) einen Index (2a) hat, der dazu dient, eine privilegierte Beobachtungsrichtung zu materialisieren und Informationen ($\psi_r$, $\theta_r$) des Rechners (6) zu empfangen.

2. Vorrichtung nach Anspruch 1, dadurch gekennzeichnet, daß der Index (2a) beweglich ist und durch den Rechner (6) gesteuert ist.

3. Vorrichtung nach einen der Ansprüche 1 und 2, dadurch gekennzeichnet, daß das Magnetometer (3) ein statisches Triaxial-Magnetometer ist.

4. Vorrichtung nach einen der Ansprüche 1 bis 3, dadurch gekennzeichnet, daß der Beschleunigungsmesser (4) ein Triaxial-Beschleunigungsmesser ist.

5. Vorrichtung nach einen der Ansprüche 1 bis 3, dadurch gekennzeichnet, daß der Beschleuinigungsmesser (4) ein Biaxial-Beschleunigungsmesser ist.

**Claims**

1. Device for determining a line of sight, comprising a movable swivelling helmet (1) to be secured on an operator's head, a sighting unit (2) secured on the helmet and with which the live of sight is associated, and means for measuring the orientation of the helmet, characterized in that it comprises, secured on the helmet, for determining the orientation of a sighting trihedron associated with said line of sight, defined by a magnetic azimuth angle ($\psi$), an elevation angle ($\theta$) and an inclination angle ($\varphi$) determined in a reference trihedron, a gravimetric detector (4) for measuring the components of the gravity acceleration in the sighting trihedron and a magnetometric detector (3) for measuring the components of the earth magnetic field in the sightly trihedron, computer means (6) for computing said elevation and inclination angles in terms of the components of the gravity acceleration in the sighting trihedron, computing in terms of the components of the earth magnetic field in the sighting trihedron the components of the earth magnetic field along the "long" axis and the "cross" axis, and finally computing the magnetic azimuth angle the sighting unit (2) having an index (2a) for materialising a privileged direction of observation and getting informations ($\psi_r$, $\theta_r$) from the computer means (6).

2. Device according to claim 1, wherein said index (2a) is movable and controlled by said computer means (6).

3. Device according to one of claims 1 and 2, wherein the magnetometric detector (3) is a tri-axial static magnetometer.

4. Device according to one of claims 1 to 3, wherein the gravimetric detector (4) is a tri-axial accelerometer.

5. Device according to one of claims 1 to 3, wherein the gravimetric detector (4) is a bi-axial accelerometer.

FIG 1

FIG. 3

FIG. 2

FIG. 4